# DEMANDE DE BREVET EUROPEEN

(11) **EP 1 266 575 A1**
(43) Date de publication de la demande: **18.12.2002**
(21) Numéro de dépôt: 02291317.2
(22) Date de dépôt: 30.05.2002
(51) Int. Cl.: A23G 3/00, A23G 3/02

(54) **Sucre cuit sans sucre aere et graine**

(30) Priorité: 11.06.2001 FR 0107612
(71) Demandeur: Roquette Frères, 62136 Lestrem (FR)
(72) Inventeur: Parady, Tom, Hancock, Illinois 62341 (US)
(74) Mandataire: Boulinguiez, Didier

(57) **Abrégé**

L'invention a pour objet un procédé de fabrication d'un sucre cuit sans sucre aéré et grainé, caractérisé en ce qu'il comprend les étapes consistant à :
- cuire un sirop comprenant au moins 60%, de préférence au moins 70% en poids sur sec d'un disaccharide hydrogéné, de manière à obtenir une masse cuite,
- battre la masse cuite obtenue jusqu'à refroidissement au-dessous de la température de fusion dudit disaccharide hydrogéné,
- travailler la masse résultante et l'aérer,
- mettre en forme ladite masse aérée, et la laisser durcir de manière à obtenir un sucre cuit aéré,
- procéder à un grainage forcé en milieu humide, de manière à obtenir un sucre cuit aéré et grainé.

Elle a également pour objet un sucre cuit sans sucre, aéré et grainé, caractérisé en ce que sa matière sèche édulcorante comprend au moins 60%, et de préférence au moins 70% en poids d'un disaccharide hydrogéné.

## Description

La présente invention a pour objet un procédé de préparation d'un sucre cuit sans sucre aéré et grainé. Elle a également pour objet un nouveau sucre cuit sans sucre aéré et grainé.

On entend par « sucre cuit aéré et grainé » au sens de la présente invention une classe très particulière de sucres cuits, qui ont pour principale caractéristique d'être pratiquement essentiellement cristallisés, non transparents et non collants, et présentant une texture dure, mais relativement tendre et friable, originale et inhabituelle pour des sucres cuits. Ce type de confiseries, surtout développé pour le marché américain, sont généralement désignés aux Etats-Unis par le terme « mints» ou « after-dinner mints » en raison du fait qu'elles sont souvent fortement aromatisées à la menthe. Toutefois, ces confiseries sont toujours formulées essentiellement avec du saccharose, lequel est généralement cuit en présence d'un peu de tartrate de sodium ou d'un peu de sirop de glucose pour parvenir à des sucres cuits grainés.

On distinguera les sucres cuits au sens de la présente invention des confiseries aérées et grainées telles que décrites dans le brevet EP-B1-630 573, dont la Demanderesse est titulaire, qui consistent en guimauves, caramels, pâtes à mâcher et autres confiseries tendres auxquelles la présente invention ne s'attache pas.

Les sucres cuits selon la présente invention se caractérisent par leur état essentiellement cristallin et par une texture courte et croquante, plus ou moins tendre et plus ou moins friable.

De nos jours, pour ce qui concerne la confiserie et les friandises, il semble que de nouvelles tendances de consommation se dessinent. Les notions d'équilibre nutritionnel et d'hygiène de vie sont consciemment ou non prises en compte dans l'alimentation d'aujourd'hui. Bien que le plaisir du sucré reste toujours très vivace, bon nombre de consommateurs souhaitent éviter les problèmes liés à la consommation des sucres. C'est dans ce but que les confiseurs ont été amenés à développer des formulations sans sucre dans lesquelles les polyols trouvent un juste emploi en raison de leur innocuité vis-à-vis des dents et de leur caloricité réduite par rapport au saccharose.

L'une des grandes difficultés auxquelles les formulateurs de confiseries sans sucre ne peuvent se soustraire est celle de réussir la fabrication de produits en tous points semblables aux produits traditionnels au point de s'y méprendre, ceci sans avoir à modifier ou à complexifier de façon importante les installations et les procédés en place dans les industries.

A la connaissance de la Demanderesse, il n'existe pas à l'heure actuelle de procédés techniquement et économiquement viables permettant la fabrication de sucres cuits sans sucre aérés et grainés selon l'invention, présentant les caractéristiques qualitatives énoncées plus haut. Fort de ce constat, la Demanderesse s'est donc attachée à remédier à cette carence.

C'est après maints essais que la Demanderesse a eu le mérite de trouver, de façon surprenante et inattendue, que l'on pouvait produire, selon un procédé particulier, des sucres cuits aérés et grainés d'excellente qualité et stables dans le temps.

La présente invention a donc pour objet un procédé de fabrication de sucres cuits sans sucre aérés et grainés, caractérisé en ce qu'il comprend les étapes consistant à :
- cuire un sirop comprenant au moins 60% en poids d'un disaccharide hydrogéné de manière à obtenir une masse cuite,
- battre ladite masse cuite jusqu'à refroidissement au-dessous de la température de fusion dudit disaccharide hydrogéné,
- travailler la masse résultante et l'aérer,
- mettre en forme la masse aérée et la laisser durcir de manière à obtenir un sucre cuit aéré,
- procéder à un grainage forcé en milieu humide de manière à obtenir un sucre cuit sans sucre aéré et grainé.

Selon l'invention, il est essentiel que la charge édulcorante totale du sucre cuit, apportée en majorité par ledit sirop soit constituée d'au moins un disaccharide hydrogéné majoritaire, c'est à dire à hauteur d'au moins 60% en poids de la matière sèche dudit sirop. La Demanderesse a en effet trouvé qu'en deçà d'une teneur de 60%, il n'est pas possible de réaliser des sucres cuits selon l'invention, comme il sera exemplifié par ailleurs.

Dans la pratique, on préfère que ce disaccharide hydrogéné soit présent à hauteur d'au moins 70% en poids de la matière sèche dudit sirop. Ce disaccharide hydrogéné pourra être avantageusement choisi dans le groupe constitué par le maltitol, le lactitol, l'isomalt, seuls ou en mélange entre eux.

On peut ajouter à ce sirop tout ingrédient susceptible d'entrer dans la composition des sucres cuits, comme notamment des arômes, colorants, agents acidulants, édulcorants intenses, principes actifs, et des minéraux tels que calcium et magnésium notamment.

De préférence, on procède à la cuisson du sirop à une température comprise entre 160°C et 200°C sous pression atmosphérique, ou à une température comprise entre 140 et 160°C sous vide. La température exacte de cuisson variera selon le type d'évaporateur en place et notamment le niveau de vide appliqué.

On procède ensuite au refroidissement et à l'aération de la masse cuite en deçà de la température de fusion dudit disaccharide hydrogéné majoritaire en battant cette masse à haute vitesse, par exemple dans un mélangeur planétaire ou un batteur à pression d'air.

Selon une variante du procédé selon l'invention, on peut amorcer ensuite la cristallisation de la masse cuite par ajout à la masse cuite refroidie d'une poudre de disaccharide hydrogéné correspondant au disaccharide hydrogéné majoritaire initialement introduit. Pour fixer les idées, on ajoutera une poudre de maltitol à un sirop dont la matière sèche comprend au moins 60%, de préférence au moins 70% de maltitol, ou une poudre de lactitol à un sirop dont la matière sèche comprend au moins 60%, de préférence au moins 70% de lactitol.

De préférence, ladite poudre présente une fine granulométrie, c'est à dire un diamètre moyen inférieur à 100 micromètres. Cette addition représente préférentiellement 0,1 à 3% en poids de la matière sèche totale.

On procède ensuite à un travail de la masse cuite dans le but de permettre la propagation de la cristallisation et aussi de l'aérer. On utilise à cet effet par exemple une étireuse ou un foisonneur sous pression, et on travaille à une température adéquate de sorte que la viscosité de la masse soit correcte. Il faut en effet que ladite masse soit suffisamment visqueuse pour pouvoir l'étirer.

La masse cuite refroidie et aérée est ensuite mise en forme par exemple par moulage, formage ou pressage suivi d'une découpe. On laisse ensuite durcir les articles obtenus et on procède à un grainage forcé en milieu humide, par exemple en les exposant à une atmosphère à 80% d'humidité relative et 37°C pendant 1 à 4 jours. Cette opération a pour but de parfaire la cristallisation des sucres cuits et ainsi de s'affranchir des problèmes de collage des sucres cuits entre eux si ceux-ci sont commercialisés sans emballages individuels.

On obtient alors des sucres cuits sans sucre aérés et grainés, pratiquement essentiellement cristallisés, non collants, d'aspect blanc, de texture courte et friables.

Selon l'invention, la charge édulcorante constitutive desdits sucres cuits comportera, outre le disaccharide hydrogéné majoritaire, des sirops de polyols ou des sirops d'oligosaccharides ou de polysaccharides hydrogénés, des maltodextrines branchées hydrogénées ou non telles que celles décrites dans la demande de brevet EP-A1-1.006.128 dont la demanderesse est titulaire, du polydextrose ou encore des fructo- ou galacto-oligosaccharides. On pourra par exemple, sans que ce soit indispensable, ajouter au sirop initial avant cuisson des sirops de maltitol, comme notamment le LYCASIN®HBC commercialisé par la Demanderesse, pour améliorer la stabilité des sucres cuits finals. De bons résultats ont été obtenus en incorporant à la matière sèche du sirop initial avant cuisson 10, 20 ou 30% de matière sèche d'un tel sirop de maltitol.

Selon une variante de l'invention, la matière sèche du sirop initial peut comprendre également jusqu'à 7% en poids d'au moins un polyol de faible poids moléculaire, comme notamment le xylitol, l'érythritol ou le mannitol, seuls ou en mélange entre eux. Au-delà de cette teneur, l'hygroscopicité des sucres cuits selon l'invention devient trop importante.

Selon une autre variante de l'invention, les sucres cuits aérés et grainés obtenus peuvent être en outre dragéifiés, en utilisant toute technique connue de l'homme du métier. On pourra, à titre d'exemple, et selon le type de sucres cuits dragéifiés souhaités mettre en oeuvre un des procédés décrits dans les brevets EP-B1-201412, EP-B1-625311 ou encore dans la demande de brevet EP-A1-774210, dont la demanderesse est titulaire.

L'invention a également pour objet un nouveau sucre cuit sans sucre, aéré et grainé. Plus précisément, l'invention a pour objet un sucre cuit sans sucre aéré et grainé, caractérisé en ce que sa matière sèche édulcorante comprend au moins 60%, de préférence au moins 70% en poids d'un disaccharide hydrogéné.

De préférence, ledit disaccharide hydrogéné est choisi dans le groupe constitué par le maltitol, le lactitol, l'isomalt, seuls ou en mélange entre eux.

A la connaissance de la Demanderesse, de tels sucres cuits sans sucre constituent de nouveaux produits industriels.

Selon une variante de l'invention, la matière sèche édulcorante dudit sucre cuit peut comprendre en outre jusqu'à 7% en poids d'au moins un polyol choisi dans le groupe constitué par le mannitol, le xylitol, l'érythritol, seuls ou en mélange entre eux.

Selon une autre variante de l'invention, la matière sèche édulcorante dudit sucre cuit comprend en outre un ou plusieurs sirops de polyols, de polysaccharides ou d'oligosaccharides hydrogénés, comme notamment les sirops de maltitol tels que le LYCASIN®HBC commercialisé par la demanderesse, des maltodextrines branchées hydrogénées ou non telles que celles décrites dans la demande de brevet EP-A1-1.006.128 dont la demanderesse est titulaire, du polydextrose, ou encore des fructo- ou galacto-oligosaccharides. De très bons résultats ont notamment été obtenus lorsque la matière sèche édulcorante desdits sucres cuits comprend en outre jusqu'à 50% de matière sèche d'un sirop de maltitol tel que le LYCASIN®HBC.

Les sucres cuits conformes à l'invention peuvent comprendre bien entendu d'autres ingrédients comme des arômes, des agents acidulants, des colorants, des édulcorants intenses, des principes actifs, des minéraux tels que notamment le calcium ou le magnésium.

En ce qui concerne la teneur en eau des sucres cuits selon l'invention, celle-ci est généralement comprise entre 0,5 et 10%, de préférence entre 1 et 5%.

Les sucres cuits conformes à l'invention peuvent en outre comporter un revêtement cristallin sans sucre obtenu par dragéification selon toute technique connue de l'homme du métier.

L'invention sera mieux comprise à la lecture des exemples qui suivent, qui se veulent illustratifs et non limitatifs.

### Exemple 1

On compare le comportement de différents polyols à l'aide de différentes formulations de sirops à environ 75% de matière sèche, à partir desquelles on prépare, selon le même procédé, des sucres cuits selon l'invention.

| Composition de la matière sèche du sirop à 75%MS (% en poids sec) | **A** | **B** | **C** | **D** | **E** | **F** | **G** | **H** | **I** |
|---|---|---|---|---|---|---|---|---|---|
| Maltitol (sec) | 100 | 80 | 95 | 76 | 40 | 0 | 90 | 0 | 0 |
| Xylitol (sec) | 0 | 0 | 5 | 5 | 0 | 100 | 10 | 0 | 0 |
| Mannitol (sec) | 0 | 0 | 0 | 0 | 0 | 0 | 0 | 50 | 15 |
| LYCASIN®HBC (sec) | 0 | 20 | 0 | 19 | 60 | 0 | 0 | 50 | 85 |

Pour préparer des sucres cuits selon l'invention, on met en oeuvre pour toutes les formules le procédé suivant:
- on cuit le sirop à 190°C sous pression atmosphérique
- on refroidit la masse cuite obtenue jusqu'à ce que la température soit inférieure à 140°C,
- on ajoute 2% en poids par rapport à la matière sèche du sirop une poudre de polyol (amorce) correspondant au polyol majoritaire du sirop (maltitol, xylitol) et les arômes (0,1 à 2% en poids de la matière sèche édulcorante du sirop) et on poursuit le battage,
- on étire la masse aérée pendant 5 minutes sur une étireuse
- on met en forme la masse obtenue que l'on laisse durcir
- on procède à un grainage forcé en plaçant les sucres cuits formés à 37°C et 80% d'humidité relative pendant 1 à 4 jours.

Résultats : les formules A à D donnent d'excellents résultats.

La formule E donne des sucres cuits collants, non grainés.

La formule F donne une masse cuite qui reste liquide.

La formule G reste à l'état liquide après maturation.

La formule H donne une masse cuite non travaillable qui cristallise en refroidissant.

La formule I donne des sucres cuits collants, devenant liquides après maturation.

## Revendications

1. Procédé de fabrication d'un sucre cuit sans sucre aéré et grainé, **caractérisé en ce qu'**il comprend les étapes consistant à :
- cuire un sirop comprenant, sur matière sèche, au moins 60%, de préférence au moins 70% en poids d'un disaccharide hydrogéné, de manière à obtenir une masse cuite,
- battre ladite masse cuite jusqu'à refroidissement au-dessous de la température de fusion du disaccharide hydrogéné,
- travailler la masse résultante et l'aérer,
- mettre en forme ladite masse aérée, et la laisser durcir de manière à obtenir un sucre cuit aéré,
- procéder à un grainage forcé en milieu humide, de manière à obtenir un sucre cuit aéré et grainé.

2. Procédé selon la revendication 1, **caractérisé en ce que** ledit disaccharide hydrogéné est choisi dans le groupe constitué par le maltitol, le lactitol, l'isomalt, seuls ou en mélanges entre eux.

3. Procédé selon l'une ou l'autre des revendications 1 et 2, **caractérisé en ce que** ledit sirop comprend en outre jusqu'à 7% en poids sur matière sèche d'au moins un polyol choisi dans le groupe constitué par le mannitol, le xylitol, l'érythritol, seuls ou en mélange entre eux.

4. Procédé selon la revendication 1, **caractérisé en ce qu'**il comprend en outre une étape de dragéification du sucre cuit aéré et grainé.

5. Sucre cuit sans sucre, aéré et grainé, **caractérisé en ce que** sa matière sèche édulcorante comprend au moins 60%, et de préférence au moins 70% en poids d'un disaccharide hydrogéné.

6. Sucre cuit sans sucre aéré et grainé selon la revendication 5, **caractérisé en ce que** ledit disaccharide est choisi dans le groupe constitué par le maltitol, le lactitol, l'isomalt, seuls ou en mélange entre eux.

7. Sucre cuit sans sucre aéré et grainé selon la revendication 6, **caractérisé en ce que** ledit disaccharide hydrogéné est le maltitol.

8. Sucre cuit sans sucre aéré et grainé selon l'une quelconque des revendications 5 à 7, **caractérisé en ce que** sa matière sèche édulcorante comprend en outre jusqu'à 7% en poids d'au moins un polyol de faible poids moléculaire choisi dans le groupe constitué par le mannitol, le xylitol, l'érythritol, seuls ou en mélange entre eux.

9. Sucre cuit sans sucre aéré et grainé selon l'une quelconque des revendications 5 à 8, **caractérisé en ce qu'**il comporte un revêtement cristallin sans sucre obtenu par dragéification.

10. Sucre cuit sans sucre aéré et grainé selon l'une quelconque des revendications 5 à 9, **caractérisé en ce qu'**il comprend en outre jusqu'à 50% de matière sèche de sirop de maltitol.

11. Sucre cuit sans sucre aéré et grainé selon l'une quelconque des revendications 5 à 10, **caractérisé en ce que** sa teneur en eau est comprise entre 0,5 et 10%, de préférence entre 1 et 5%.
